# EUROPEAN PATENT SPECIFICATION

(11) **EP 0 348 542 B1**
(45) Date of publication and mention of the grant of the patent: **17.03.1993**
(21) Application number: 88110452.5
(22) Date of filing: 30.06.1988
(51) Int. Cl.: C04B 26/02, E01C 7/30

(54) **Composition for the preparation of an agglomerate made up of basic components together with a plastic-based binder, its processing and the products obtained**
Zusammensetzung zum Herstellen eines Agglomerats aus basischen Komponenten und einem Harzbindemittel, seine Herstellung und die erhaltenen Produkte
Composition pour la préparation d'un agglomérat de composants de base avec un liant à base de matière plastique, sa mise en oeuvre et produits obtenus

(43) Date of publication of application: 03.01.1990
(73) Proprietor: NORTHSTAR CIVIL ENGINEERING Ltd., Gibraltar (GI)
(72) Inventor: Bratianu, Vintila, 75017 Paris (FR)
(74) Representative: Büchel, Kurt F., Dr.

(56) References cited:
- FR-A- 2 386 499
- FR-A- 2 563 212
- OA-A- 6 700
- US-A- 3 364 168
- US-A- 3 788 883

## Description

The invention relates to a compound and a process for producing an agglomerate from basic materials such as, for example, pebbles, gravels or sand, which will form resistant surfaces such as roads, pavements, tracks or areas suitable for a variety of uses. The invention also relates to the high-strength agglomerate obtained in accordance with the invention.

There exist several processes for preparing agglomerates of this type. In one conventional process, the basic components, such as pebbles, gravels and/or sand are mixed with a cement- and/or lime-based binder and suitable amount of water to form ready-to-use concrete. Once the mixture has been poured into a mould or placed and dried, the concrete sets and hardens over a more or less long period. Such concretes are used widely in the building industry and for producing high-quality flooring, although at a relatively high price.

In another conventional process - used mainly in road construction - the basic materials - pebbles and gravels - are prior-heated in a flame and then sprayed and mixed with liquid bitumen which has been heated separately to form a hot agglomerate which is compacted "in situ" to form the road pavement. These surfacings have the advantage of being usually much less expensive than conventional concrete; moreover, they can be applied more rapidly and the fact that they are relatively flexible and elastic makes them less subject to cracking than most concretes. These bituminous surfacings are, however, not usually as strong as concretes. In addition, they are generally more affected by temperature variations and their mechanical properties tend to be highly temperature dependent - which may make them unsuitable for applications in which temperatures exceed the average ambient level. They are also very sensitive to cyclic freezing and thawing.

In another technique, used in particular for road resurfacing, the basic materials, (i.e.pebbles, gravels and and/or sand) are placed "in situ" and compacted either before and/or after a hot bitumen is spread over them to form a binder coating which maintains the cohesion of the compacted layer after air cooling. However, this type of surfacing is not highly resistant.

Attempts have recently been made to produce agglomerates - in particular for road construction - which comprise the conventional normal basic components (i.e. pebbles, gravels and/or sand) and a plastics-based binder and, in particular a plastics-based binder produced from recycled plastics scrap.

It was therefore decided to use the plastics binder as a substitute or, rather, as a complement or an adjuvant to the bitumen and apply it in much the same manner. The results have proved most disappointing, and it was found impossible to achieve a satisfactory product without using high-quality plastics in such proportions that precluded the product from any commercial future whatsoever without using a bitumen content similar to that in conventional road building techniques, in which case, the plastics binder plays only a secondary and subsidiary role.

Another approach put forward - usually for sports grounds - is the use of agglomerates of rubber chips - and, in particular, recycled scrap rubber chips and/or cork and other fillers bonded together with a cold-applied thermosetting resin such as polyurethane or epoxy resin to which is added, during application, the appropriate curing agent. The techniques involved are very expensive, extensive precautions need to be taken during application, and the finished surfaces are usually very sensitive to humidity.

Yet another approach has been to use strips of flexible materials to reinforce the bituminous agglomerate and, in particular, strips of recycled plastics scrap have been embedded in the agglomerate in order to make the agglomerate more cohesive and enhances resistance to freezing and thawing.

The object of this invention is to provide a solution to the above-mentioned problems encountered in existing practices by making it possible to produce an agglomerate made up of basic materials such as pebbles, gravels or sand which can be used to construct high-resistance road, track or multi-purpose surfaces by employing basically an easy-to-apply compound based on suitably selected thermoplastic resins.

In accordance with the invention, this compound is characterized by the fact that it incorporates a binder which combines:
- at least one polar synthetic resin such as, in particular, synthetic aliphatic resins, aromatic resins, polycyclic macro-molecular phenol resins, rosin, coumarone indene or phenol formaldehyde;
- at least one low-molecular-weight thermoplastic material (i.e. less than 30,000) such as low-density polyethylene (LDPE) and/or its copolymers, polypropylene (PP) and/or its copolymers, polyvinyl acetates (PVA) or its copolymers such as polyvinyl acetochloride (PVAC) or ethyl vinyl acetate (EVA);
- at least one plasticizer such as chlorinated paraffins; ester type plasticizer, such as phthalates, adipates, sebacates; styrene copolymers; bitumen or tar.

In order to obtain an agglomerate of suitable resistance, the compound includes, in addition to the above-mentioned binder, a strengthening and reinforcing component comprising at least one high-molecular-weight thermoplastic (over 15 000) which is compatible with the binder, such as, for example, low-density polyethylene thermoplastics (LDPE), high-density polyethylene (HDPE), polypropylene (PP), polyvinyl acetochloride (PVAC), vinylidene copolymer or ethylene vinyl acetate (E/VAC).

In accordance with the process in the invention, the agglomerate is prepared by first heating the filler (i.e. the basic components - pebbles, gravels and/or sand) and then, when the filler is at a suitable temperature, the required proportions of the above compound are added to it.

In contrast to the results obtained with previous practice, when using the low-molecular-weight binder, this procedure ensures than the filler is well wetted by the compound but, at the same time, the binder does not prevent the strength-enhancement and reinforcement component from bonding with each filler particle thus guaranteeing that the whole mass has, within a few hours, achieved perfect and definitive "set" strength.

The binder and the strength-enhancement and reinforcement component act in concert, with each fulfilling its role in turn: the binder wets and bonds and the strength-enhancement and reinforcement component increases the strength; however, the agglomerate's durability and water and chemical resistance derived from the "setting" reaction between these two compatible components.

At first sight, the solution might seem a complex one since the binder, with its low-molecular-weight is subject to cracking and after coding, has no intrinsic strength since its co-efficient of contraction may be as high as 20%. This dimensional contraction is, necessarily, at first sight, unsatisfactory yet, on the other hand, the low-molecular-strength enhancement and reinforcement component is not of sufficiently low viscosity to adequately wet the filler. Consequently, unless a high ratio is used, a satisfactory agglomerate would not be achievable. Nevertheless, the synergy and interaction of the binder and the strength-enhancement and reinforcement component results in the desired effect since the advantages of each are combined whereas the drawbacks are mutually neutralized. Moreover, the chemical reaction itself, which occurs a few hours after the agglomerate has been produced and when it "sets", ensures that the equalities obtained are durable and that, thanks to the interactive migration of binder and the strength-enmhancement and reinforcement component, it is durable and unaffected by external agents.

The compound of the invention is significantly improved by also incorporating in the compound at least one antioxidant and antistatic stabilizer with a phenol, alkyl derivative, bis-methylene or mercaptan base.

It is possible to further improve the mixture's cohesion and flexibility by adding an inert, fibrous reinforcement material such as, for example, glass fibre.

It is advantageous for the relative ratios of binder and strength-enhancement and reinforcement component to be in the 20 to 80% range and, normally and preferentially, the quantities employed are 30% binder and approximately 70% strength-enhancement and reinforcement component; however, the ratios can be modified depending on whether one requires greater flexibility or strength from the agglomerate and on the exact specification of the binder and the strength-enhancement and reinforcement component being combined.

Binder viscosity is usually less than 30 000 centipoises (cps) at 180°C; and the average molecular weight of the strength-enhancement and reinforcement component is usually greater than about 15 000.

The following examples will give a clearer picture of the invention and its application.

### EXAMPLE 1

The agglomerate is made from the following mixture:
- rolled sand of 0/2 mm particle size, 40% by weight;
- porphyry of 2/6 mm particle size, 32% by weight;
- porphyry of 6/10 mm particle size, 28% by weight.

Setting compound: 6% by weight of the materials:
- binder:
   - low-molecular-weight polyethylene, 12% by weight,
   - aromatic resins, 6% and rosin 4%, i.e. 10% by weight in toto,
   - plasticizers (chlorinated paraffin and sebacates) 5% by weight (in a ratio of approximately 50/50);
- strength-enhancement and reinforcement component:
   - high-molecular-weight polyethylene (approximately 20 000): 70% by weight;
- stabilizer (antioxidant, antistatic): 3% by weight.

The pebbles and sand filler are loaded into a mixer and heated to about 170°C. When the filler has reached a uniform temperature, the 6% by weight of the "setting" compound is added.

The binder and the strength-enhancement and reinforcement component are separately preheated, powdered and then mixed cold; the homogenous powder mix is then fed into the mixer.

After a few minutes, the agglomerate is removed from the mixer and can be calendered and moulded "in situ" similar to conventionally prepared bituminous agglomerates.

Tests carried out following procedures developed by the French Highways Department Laboratory indicated a Duriez strength of 180 bars (i.e. 18.10⁶ pascal) and an immersion/compression ratio of 0.90; this is the ratio between the compression figure measured following 8-days immersion and that for the same product dry.

### EXAMPLE 2

The data are the same as those for Example 1 except that the "setting" compound is as follows:
- binder:
   - low-molecular-weight polyethylene and polyethylene copolymers: 28% by weight,
   - aliphatic and phenolic resins: 10% by weight,
   - plasticizers: 10% by weight;
- strength-enhancement and reinforcement component:
   - high-molecular-weight polyethylene: 50% by weight;
- stabilizers: 2% by weight.

The mixture was processed as in Example 1.

Tests showed a Duriez compression strength of 160 bars (i.e. 16.10⁶ pascals) and an immersion/compression ratio of 0.92. The significant reduction in strength is due to a lower proportion of strength-enhancement and reinforcement component in the agglomerate, which was reduced from 70% to 50%.

### EXAMPLE 3

The basic components were the same as those used in Examples 1 and 2. The compound of the agglomerate (6% by weight of the total material) was as follows:
- binder:
   - low-molecular-weight polyethylene and polyethylene copolymers: 25% by weight,
   - aliphatic and aromatic resins: 20% by weight,
   - plasticizers: 4% by weight;
- strength-enhancement and reinforcement component: 50% by weight, with the following composition:
   - 35% high-molecular-weight polyethylene,
   - 35% ethylene vinyl acetochloride,
   - 30% polyvinylidene chloride;
- stabilizer: 1% by weight.

The mixture was processed in the same way as in Examples 1 and 2 and had a Duriez compression strength of about 200 bars (i.e. 2.10⁷ pascals), and an immersion/compression ratio of 0.87.

The agglomerate's particularly high strength is attributable to the synergistic reaction which is especially clear with this strength-enhancement and reinforcement component composition.

It is interesting to note that the agglomerates obtained in accordance with this invention react quite differently to known commercial products and in particular to conventional bituminous concrete.

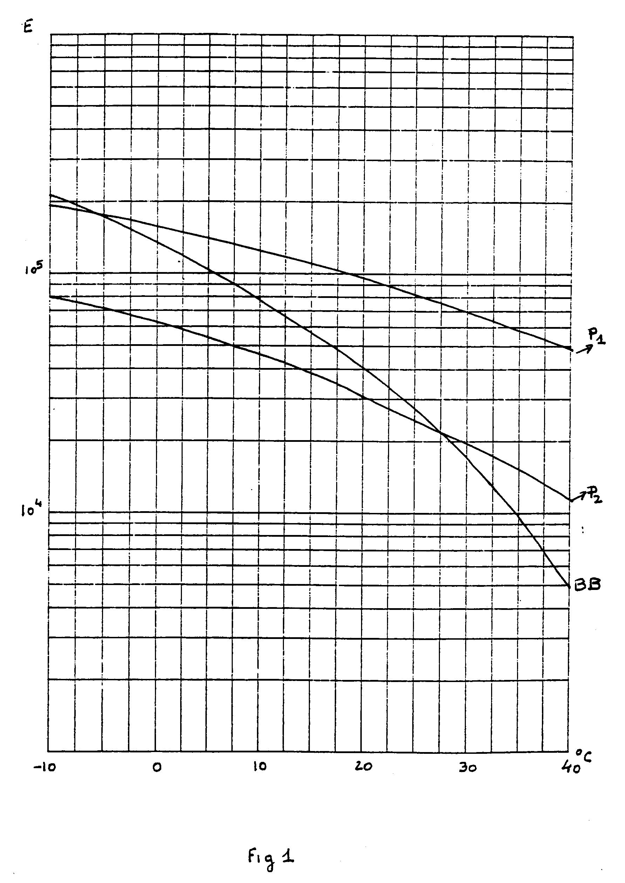

For example, Figure 1 shows comparative curves of the modulus of rigidity E on the Y axis measured in megapascals plotted against the temperature in °C on the Y axis. Curves P1 and P2 relate to agglomerates in accordance with the invention and the curve BB is that for a conventional bituminous concrete. The modulus of rigidity for the agglomerates in accordance with the invention varies little in relation to temperature in comparison with the considerable variations (logarithmic scale) encountered with conventional bituminous concrete. Concretes with applications which are comparable at normal ambient temperatures can be used without problem at extremely low or extremely high temperatures, in accordance with the invention; this is not the case with conventional concretes.

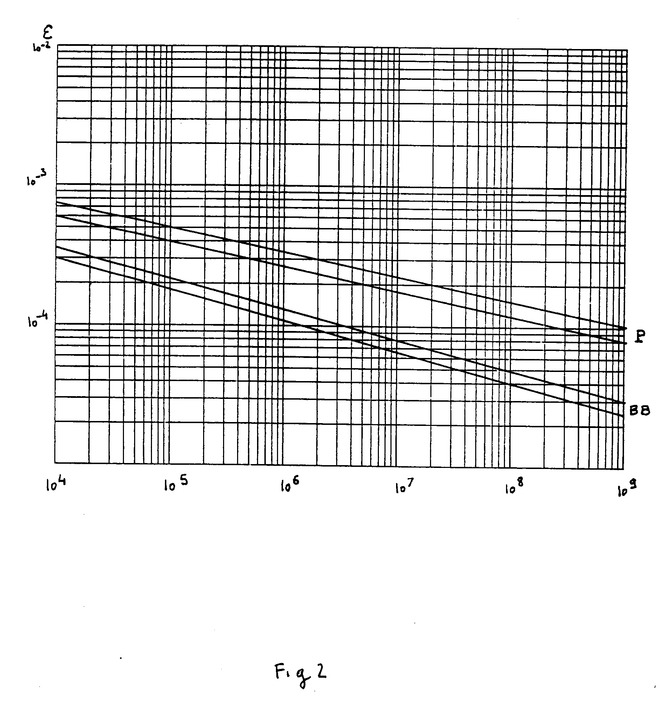

Figure 2 shows the bands of the fatigue curves for the agglomerates manufactured in accordance with the invention (band P) and for conventional bituminous concretes (band BB). The number of stresses applied has been plotted on the X axis whilst the permissible deformation was plotted on the Y axis. A comparison of these curves indicates that the agglomerates produced in accordance with the invention have an average service life some 100 times greater than that of bituminous concretes.

The invention is, of course, in no way restricted to the compounds that have been specified above or to the examples described.

Consequently, and in particular, various adjuvants or fillers can be added to the binder and/or to the strength-enhancement and reinforcement component. Similarly, pigments may be added should it be desired to provide the agglomerate with a specific colouring.

In general, the binder is composed of synthetic resins having a melting point of less than 130°C. The polar nature of these resins ensures high adhesion to the materials and good affinity - in particular chemical affinity - to the other strength-enhancement and reinforcement component of the mixture.

The strength-enhancement and reinforcement component in general comprises 35 to 75% by weight of thermoplastics, 10 to 40% by weight of synthetic resins, 3 to 15% by weight of plasticizers, 0.1 to 5% by weight of stabilizers. One may add to these components various mineral fillers and, in particular, glass fibre at a rate of 1 to 15% by weight.

Experience has shown that it is advantageous to use bitumens or tars for plasticizers as adjuvants to the binder.

The bitumen or tar can be added and pre-mixed before the compound is mixed together with the pebbles and other materials. As a variant, or in addition, the bitumen or the tar may also be added to and mixed with the binder before this mixture (binder + bitumen) is fed into the mixer at the same time as the strength-enhancement and reinforcement component.

## Claims

1. Powdered compound made up of thermoplastic resins for producing an agglomerate of basic materials comprising, for example, pebbles, gravels or sand, for the construction of high-strength surfaces such as are use for roads, tracks or multipurpose areas characterized by the fact that it incorporates a binder which is a preheated and powdered blend of:
- at least one polar resin such as, in particular, aliphatic and aromatic synthetic resin, polycyclic macromolecular phenol resin, rosin, coumarone-indene or phenol formalde hyde;
- at least one thermoplastic resin having a molecular-weight lower than 30 000, such as low-density polyethylene and/or its copolymers, polyvinyl acetates (PVA) and/or its copolymers such as polyvinyl acetochloride (PVAC) or ethylene vinyl acetate (EVA);
- and at least one plasticizer such as chlorinated paraffins; ester type such as phthalates, adipates, sebacates; styrene copolymers; bitumen or tar.

2. Compound as in Claim 1, characterized by the fact that in addition to the binder, it contains a powdered strength-enhancement and reinforcement component made up of at least one thermoplastic resin having a molecular-weight greater than 15 000 and being compatible with the binder, such as low-density polyethylene thermoplastics, high-density polyethylene (HDP), polypropylene (PP), polyvinyl acetochloride (PVAC), ethylene vinyl acetate (EVA).

3. Compound in accordance with Claim 1 or Claim 2, characterized by the fact that it comprises, in addition, at least one antioxidant and/or antistatic stabilizer.

4. Compound in accordance with one of the above claims, characterized by the fact that it incorporates, in addition, a fibrous reinforcement material such as glass fibre.

5. Compound in accordance with one of the Claims 2 to 4, characterized by the fact that the relative proportions of binder and the strength-enhancement and reinforcement component lie within the range of 20 to 60%, and preferentially usually around 30% binder and around 70% strenght-enhancement and reinforcement component.

6. Compound in accordance with one of the previous claims, characterized by the fact that the binder has a viscosity of less than 30 pascal seconds at 180°C.

7. Process for the preparation for a compound in accordance with one of claims 2 to 6, characterized by the fact that the binder and the strength-enhancement and reinforcement component are prepared separately hot, powdered, then mixed cold in the required proportions with a view to the use for the production of the agglomerate.

8. Process for preparing an agglomerate using a compound in accordance with one of claims 2 to 6, characterized by the fact that the basic materials are heated to a suitable temperature, in the vicinity of the binder melting point; and that to this one adds cold, in a mixture, the compound in the selected proportions and the mixture is turned until a ready-to-use agglomerate is obtained.

9. A high-strength agglomerate obtained from a compound in accordance with one of the above claims 1 to 6, characterized by the fact that it is made up of basic materials such as, for example, pebbles, gravels or sand bound with each other by a mixture comprising at least one above-mentioned binder and at least one above mentioned strength-enhancement reinforcement components, which has reacted and the molecules of which indissociably penetrate into each other and are bound with each other and the filler components.

10. Process for the preparation of an agglomerate using a compound in accordance with one of claims 2 to 6, characterized by the fact that prior to the mixing specified above, one mixes on the one hand the binder and the plasticizer and then one adds, during mixing, this mixture and the above-mentioned strength-enhancement and reinforcement component.

11. Process for the preparation of an agglomerate in accordance with claim 9 or in accordance with the process of claim 10, characterized by the fact that bitumen or tar that form a plasticizer as mentioned above are added to the above-mentioned basic components and, after homogenization of the mixture, one adds the polar resin compound, the thermoplastic material and the above-mentioned strength-enhancement and reinforcement component.

## Patentansprüche

1. Pulvermischung aus thermoplastischen Harzen für die Herstellung eines Agglomerats aus Grundstoffen, z.B. Grobkies, Feinkies oder Sand, für die Erzeugung widerstandsfähiger Flächen, wie Strassen, Rollbahnen oder Mehrzweckflächen, dadurch gekennzeichnet, dass sie ein vorerhitztes Bindemittel enthält, das eine Pulvermischung folgender Bestandteile ist:
- mindestens ein polares Kunstharz, wie z.B. aliphatische und aromatische Harze, Phenolharz mit polyzyklischen Makromolekülen, Kolophonium, Cumaron-Indenharz, Phenolformaldehyd;
- mindestens ein thermoplastisches Material mit einem Molekulargewicht unter 30'000, wie z.B. Polyäthylen geringer Dichte (PEBD) und/oder seine Mischpolymerisate, Polyvinylacetate (PVA) oder ihre Mischpolymerisate, wie Polyvinylchloracetat (PVAC) oder Ethylvinylacetat (EVA);
- und mindestens ein Plastifiziermittel wie z.B. chlorierte Paraffine; Ester-Typen wie z.B. Phtalate, Adipate, Sebazate; Styrol-Mischpolymerisate; Bitumen oder Teer.

2. Pulvermischung gemäss Anspruch 1, dadurch gekennzeichnet, dass sie ausser dem Bindemittel eine festigkeitssteigernde und verstärkende Verbindung enthält, die aus mindestens einem mit dem Bindemittel kompatiblen, thermoplastischen Material mit einem Molekulargewicht über 15 000 hergestellt ist, wie z.B. aus Thermoplasten wie Polyäthylen geringer Dichte (PEBD), Polyäthylen hoher Dichte (PEHD), Polypropylen (PP), Polyvinylchloracetat (PVAC), Vinyliden-Mischpolymerisat, Ethylenvinylacetat (E/VAC).

3. Pulvermischung Anspruch 1 oder 2, dadurch gekennzeichnet, dass sie ausserdem einen antioxidierenden und/oder antistatischen Stabilisator enthält.

4. Pulvermischung nach einem der vorhergehenden Ansprüche, dadurch gekennzeichnet, dass sie ausserdem ein faserförmiges Verstärkungsmaterial, wie z.B. Glasfaser, enthält.

5. Pulvermischung nach einem der Ansprüche 2 bis 4, dadurch gekennzeichnet, dass die Gewichtsanteile des Bindemittels und der festigkeitssteigernden und verstärkenden Verbindung im Bereich zwischen 20% und 60% liegen, vorzugsweise im allgemeinen bei etwa 30% für das Bindemittel und bei etwa 70% für die festigkeitssteigernde und verstärkende Verbindung.

6. Pulvermischung nach einem der vorhergehenden Ansprüche, dadurch gekennzeichnet, dass das Bindemittel bei 180°C eine Viskosität von weniger als etwa 30 Pascal.sec aufweist.

7. Verfahren zur Herstellung einer Pulvermischung nach einem der Ansprüche 2 bis 6, dadurch gekennzeichnet, dass das Bindemittel und die festigkeitssteigernde und verstärkende Verbindung getrennt heissbehandelt, pulverisiert und in den entsprechenden Anteilen kalt gemischt werden, um das Agglomerat herzustellen.

8. Verfahren zur Herstellung eines Agglomerats unter Verwendung einer Pulvermischung nach einem der Ansprüche 2 bis 6, dadurch gekennzeichnet, dass den auf eine geeignete Temperatur nahe der Schmelztemperatur des Bindemittels erwärmten Grundstoffen die gewählten Anteile der Mischung kalt zugefügt werden, worauf das Gemisch bis zur Erzielung eines gebrauchsfertigen Agglomerats umgewälzt wird.

9. Hochfestes Agglomerat mit einer Pulvermischung nach einem der Ansprüche 2 bis 6, dadurch gekennzeichnet, dass es aus Grundstoffen, wie z.B. Grobkies, Feinkies oder Sand, gebildet wird, die ihrerseits untereinander durch ein Gemisch gebunden werden, das mindestens ein Bindemittel und wenigstens eine obgenannte festigkeitssteigernde und verstärkende, reagierte Verbindung enthält, deren Moleküle einander unlösbar durchdringen und miteinander sowie mit den Bestandteilen des Füllstoffs verbunden sind.

10. Verfahren zur Herstellung eines Agglomerats unter Verwendung einer Pulvermischung nach einem der Ansprüche 2 bis 6, dadurch gekennzeichnet, dass vor dem obgenannten Vermischen einerseitas das Bindemittel und das Plastifiziermittel gemischt werden, worauf während des Mischens diesem Gemisch die festigkeitssteigernde und verstärkende Verbindung zugegeben wird.

11. Verfahren zur Herstellung eines Agglomerats nach Patentanspruch 9 oder mittels eines Verfahrens nach Anspruch 10, dadurch gekennzeichnet, dass den obgenannten Grundstoffen Bitumen oder Teer beigemischt wird, die wie erwähnt ein Plastifiziermittel bilden, und dass nach Homogenisierung der Mischung das polare Kunstharz, das thermoplastische Material und die festigkeitssteigernde und verstärkende Verbindung zugesetzt wird.

## Revendications

1. Composition en poudre comprenant des résines thermoplastiques pour la préparation d'un agglomérat de composants de base comprenant, par exemple, des cailloux, du gravier fin ou du sable pour la constitution de surfaces à haute résistance telles que routes, pistes ou aires à divers usages, caractérisée en ce qu'elle comprend un liant en forme de poudre, préchauffé, comportant en combinaison:
- au moins une résine synthétique polaire notamment telle que résine synthétique aliphatique et aromatique, phénolique à macromolécules polycycliques, colophane, coumarone indène, phénol formaldéhyde;
- au moins une matière thermoplastique à un poids moléculaire inférieur à 30 000, telle que polyéthylène à basse densité (PEBD) et/ou ses copolymères, polyvinyle acétates (PVA) et/ou ses copolymères tels que acétochlorure de polyvinyle (PVAC) ou éthylvinylacétate (EVA);
- et au moins un plastifiant tel que paraffines chlorées; ester du type comme des phtalates, adipates, sébaçates; copolymères du styrène; bitume ou goudron.

2. Composition selon la revendication 1, caractérisée en ce que, outre le liant, elle comprend un composant de renforcement et augmentant la résistance (CRR) constitué d'au moins une résine thermoplastique à un poids moléculaire supérieur à 15 000 et compatible avec le liant, tel que des matières thermoplastiques polyéthylène à basse densité (PEBD), polyéthylène à haute densité (PEHD), polypropylène (PP), acétochlorure de polyvinyle (PVAC), acétate d'éthylène vinyle (E/VAC).

3. Composition selon la revendication 1 ou 2, caractérisée en ce qu'elle comprend en outre au moins un stabilisant du type anti-oxydant et/ou antistatique.

4. Composition selon l'une des revendications précédentes, caractérisée en ce qu'elle comprend, en outre, un matériau de renforcement fibreux tel que fibres de verre.

5. Composition selon l'une des revendications 2 à 4, caractérisée en ce que les proportions relatives du liant et du composant de renforcement et augmentant la résistance (CRR) se trouvent dans la fourchette de 20 à 60% et de préférence d'habitude à environ 30% de liant et à environ 70% de CRR.

6. Composition selon l'une des revendications précédentes, caractérisée en ce que le liant présente une viscosité à 180°C inférieure à 30 pascal secondes.

7. Procédé de préparation d'une composition selon une des revendications 2 à 6, caractérisé en ce que le liant et le CRR sont préparés séparément à chaud, réduits en poudre, puis mélangés à froid dans les proportions voulues en vue de leur utilisation pour former l'agglomérat.

8. Procédé de préparation d'un agglomérat utilisant une composition selon une des revendications 2 à 6, caractérisé en ce qu'on chauffe les composants de base jusqu'à une température convenable, voisine de la température de fusion du liant, et on leur ajoute à froid, dans un mélangeur, la composition dans les proportions choisies et on malaxe le mélange jusqu'à l'obtention d'un agglomérat prêt à l'emploi.

9. Agglomérat à haute résistance obtenu d'une composition conforme à une des revendications 1 à 6, caractérisé en ce qu'il est constitué par des composants de base, par exemple tels que des cailloux, du gravier fin ou du sable liés entre eux par un mélange comprenant au moins un liant précité et au moins un CRR précité ayant réagi et dont les molécules s'interpénètrent de façon indissociable et sont liées entre elles et aux composants de la charge.

10. Procédé de préparation d'un agglomérat selon les revendications 2 à 6, caractérisé en ce qu'on mélange préalablement au malaxage précité d'une part le liant et le plastifiant et on ajoute ensuite lors du malaxage ce mélange et le composant de renforcement et augmentant la résistance (CRR) précité.

11. Procédé de préparation d'un agglomérat selon la revendication 9 ou en accord avec le procès de la revendication 10, caractérisé en ce qu'on ajoute aux composants de base précités du bitume ou du goudron constituant un plastifiant précité et, après homogénéisation du mélange, qu'on y ajoute la composition de résine polaire, la matière thermoplastique et le composant de renforcement et augmentant la résistance (CRR) précité.
